# EUROPÄISCHE PATENTANMELDUNG

(11) **EP 3 522 480 A1**
(43) Veröffentlichungstag der Anmeldung: **07.08.2019**
(21) Anmeldenummer: 18181209.0
(22) Anmeldetag: 02.07.2018
(51) Int. Cl.: H04L 29/06, H04L 29/08

(54) **VERFAHREN ZUR DATEN-KOMMUNIKATION IN EINEM INDUSTRIELLEN NETZWERK, STEUERUNGSVERFAHREN, VORRICHTUNG, COMPUTERPROGRAMM SOWIE COMPUTERLESBARES MEDIUM**

(30) Priorität: 31.01.2018 EP 18154319
(71) Anmelder: Siemens Aktiengesellschaft, 80333 München (DE)
(72) Erfinder: Götz, Franz-Josef, 91180 Heideck (DE); Kießling, Marcel, 91235 Velden (DE); Schmitt, Jürgen, 90766 Fürth (DE)

(57) **Zusammenfassung**

Die Erfindung betrifft ein Verfahren zur Daten-Kommunikation in einem industriellen Netzwerk mit einem oder mehreren Knotenpunkten (2), Switches und/oder Bridges, via Stream, bei dem für die Datenübertragung zwischen Streamteilnehmern (1, 3, 31) über einen oder mehrere Knotenpunkte (2) des Netzwerks unter Nutzung eines Reservierungsprotokolls Ressourcen an dem oder den Knotenpunkten (2) reserviert und anschließend Daten via Stream übertragen werden, wobei für eine Übertragung von Daten von einem Sender (1) an mehrere Empfänger (3) von dem Sender (1) ein Datenframe (4) gesendet wird, der mehrere, für verschiedene Empfänger (3) bestimmte Unterdatensätze (11) aufweist, und an wenigstens einem Ausgangsport (18, 19) wenigstens eines Knotenpunktes (2) wenigstens ein Unterdatensatz (11) aus dem Datenframe (4) herausgefiltert wird, und/oder dass eine Übertragung von Daten von mehreren Sendern (31) an einen Empfänger (1) über Datenframes (4) erfolgt, die an wenigstens einem Knotenpunkt (2) mehrere, von verschiedenen Sendern stammende Unterdatensätze (11) aufweisen. Darüber hinaus betrifft die Erfindung ein Steuerungsverfahren, eine Vorrichtung, ein Computerprogramm und ein computerlesbares Medium.

## Beschreibung

Die Erfindung betrifft ein Verfahren zur Daten-Kommunikation in einem insbesondere industriellen Netzwerk mit einem oder mehreren Knotenpunkten, insbesondere Switches und/oder Bridges, via Stream, bei dem für die Datenübertragung zwischen Streamteilnehmern über einen oder mehrere Knotenpunkte des Netzwerks unter Nutzung eines Reservierungsprotokolls Ressourcen an dem oder den Knotenpunkten reserviert und anschließend Daten via Stream übertragen werden. Darüber hinaus betrifft die Erfindung ein Steuerungsverfahren, eine Vorrichtung, ein Computerprogramm und ein computerlesbares Medium.

Verteilte industrielle Steuerungsanwendungen erfordern eine garantierte Quality of Service (QoS) oder Dienstgüte in dem Kommunikationsnetzwerk, welches die Endgeräte miteinander verbindet, damit zeitsensitive Aufgaben neben nicht-Echtzeitrelevantem Datenverkehr (englisch: traffic) von dem Netzwerk ausgeführt werden können. Bei den Endgeräten kann es sich beispielsweise um speicherprogrammierbare Steuerungen (SPS, englisch: Programmable Logic Controller, PLC), IO-Geräte oder Schutzeinrichtung handeln.

Jede Anwendung in dem Netzwerk mit zeitsensitivem Datenverkehr zwischen Endgeräten kann registriert und reserviert werden, um von dem Netzwerk Garantien für einen verlustfreien Echt-Zeit-Transfer von Datenframes und eine pünktliche Lieferung zu erhalten. Das Netzwerk muss dafür die Verfügbarkeit von Netzwerkressourcen (beispielsweise Adresstabelleneinträge, Framebuffer, transmit time slices) verifizieren und Ressourcen - sofern verfügbar -zuweisen, dies für jeden Echtzeit-Datenfluss, und es muss Zugang für Echtzeit-Datenverkehr gewähren.

Innerhalb des Netzwerkes muss die Kontrollinformation über Registrierungen, Reservierungen und Weiterleite-Informationen für jeden Echtzeit-Datenfluss gespeichert werden. Der Status von jeder Reservierung muss aufrechterhalten werden. Mit einer zunehmenden Anzahl von Endgeräten und ihrem Echtzeit-Datenverkehr in demselben Netzwerk wächst die Menge von Netzwerkkontrollinformationen an. Dabei ist die Speicher- und Verarbeitungsleistung von Netzwerkknotenpunkten, beispielsweise Bridges bzw. Switches, begrenzt.

Ein weiteres Problem besteht darin, sämtliche Informationen von allen Endgeräten rechtzeitig bereitzustellen. In industriellen Steueranwendungen ist in der Regel eine einzelne SPS mit einer Vielzahl von I/O-Geräten verbunden, die einen Echtzeit-Datenaustausch erfordern. Die "Produktionsdauer" ("makespan") der gesampelten I/O-Geräte-Daten, die von vielen I/O-Geräten an eine SPS zu senden sind, muss minimiert werden. Der späteste Datenframe eines Eingangs-Sample-Zyklus, der von der SPS zu verarbeiten ist, oder eines Ausgangs-Update-Zyklus, der von einem Ausgangs-Gerät empfangen wird, bestimmt die Qualität der Kontrollschleife.

Die IEEE802.1 TSN Arbeitsgruppe definiert Erweiterungen des Ethernet Standards IEEE802.1/.3 für ein konvergierendes zeitsensitives Netzwerk (Time Sensitive Network, TSN). Basierend auf vorangegangener Arbeit der Audio-Video-Bridging (AVB) Arbeitsgruppe wird der Quality of Service für Echtzeit-Datenflüsse, was die garantierte Latenz angeht weiter verbessert. Der Status für jeden Echtzeit-Datenfluss muss dabei jedoch weiterhin im Netzwerk aufrecht erhalten werden.

"Multiple Listeners per Stream" wurde in AVB eingeführt, um die Anzahl von Echtzeit-Datenflüssen (IEEE802 nennt diess "Stream") von einer Quelle (Talker) zu mehreren Zielen (Listener) zu reduzieren. Dass Daten von einer Quelle an mehrere Ziele zu übertragen sind, ist der typische AV (Audio Video) Anwendungsfall, konkret für die Verteilung von Audiodaten von einer einzelnen Quelle an mehrere Lautsprecher.

Das Reservierungsmodell von AVB/TSN "Multiple Stream Reservation Protocoll" (MSRP) unterstützt mehrere Listener. Dabei können im Anschluss an eine von der Quelle abgehenden "Talker Advertise"-Nachricht für eine Stream mehrere "Listener join"-Reservierungen durchgeführt werden, was in einen einzelnen Streamkontroll-Informationseintrag resultiert. Die Weiterleitung von dem einen Talker zu seinen Listenern geht entlang eines einzelnen Baumes, dessen Wurzel (root) der Talker darstellt, wobei dann nur ein einzelner Weiterleite-Eintrag für alle Stream-Listener in den Netzwerkknotenpunkten erforderlich ist. Ein einzelner Ethernet-Frame wird von dem einen Talker über das Netzwerk an die mehreren Listener verteilt. Die Daten sind in einen Frame gepackt und werden an jeden Listener übertragen, wobei jeder Link maximal einmal genutzt wird.

Dieses Modell könnte im Rahmen der industriellen Automatisierung Verwendung finden, um die Anzahl von Streams von einer den Talker darstellenden SPS zu mehreren Listener darstellenden IO-Geräten zu reduzieren. Die Daten für alle "hörenden" (listening), also empfangenden IO-Geräte können unter Verwendung eines einzelnen Streams von der sendenden ("talking") SPS transferiert werden. Die Anzahl der Streams im Netzwerk und somit die Menge an Kontrollinformationen ist dann gegenüber dem Fall, dass für jedes IO-Gerät ein eigener Stream für den Empfang von Daten von der SPS eingerichtet wird, deutlich reduziert.

Abhängig von der Menge an Daten der einzelnen IO-Geräte, kann der Nachteil der vereinfachten Kontrollinformation jedoch eine exzessivere Benutzung von Bandbreite des Netzwerk sein, da individuelle I/O-Geräte nur einen Teil (englisch: subset) der Information des in dem via Stream übertragenen Frames benötigen.

Da ein geschlossener Regelkreis auch einen Rückkanal von jedem I/O-Gerät zu der SPS benötigt, muss ferner auch eine Vielzahl von Frames an die SPS gesendet werden. Wohlgeformte Ethernet Frames erfordern, dass 64+ Oktette gesendet werden, auch wenn das I/O-Gerät nur ein paar Bits von Input-Informationen hosted. Dies führt zu einer großen Anzahl von Streams, jeweils mit einem kleinen Frame, der die erforderlichen Informationen umfasst.

Ein Packen von nur wenigen Input/Output Bytes in einen 64+ Oktett Ethernet Datenframe verursacht einen Overhead und dadurch werden zusätzliche Transfer-Delays mit einem negativen Einfluss auf die Makespan bedingt.

Der Anmelderin ist bekannt, dass spezialisierte Echtzeit-Ethernet-Lösungen wie EtherCAT und PROFINET IRT existieren, um I/O-Daten von verschiedenen Geräten zur Reduzierung der Makespan in einen einzelnen Frame zu packen, der auch als Summenframe bezeichnet wird. Diese spezialisierten Lösungen haben jedoch ihre Grenzen. Zum einen sind sie anwendungsspezifisch, vor allem auf den gepackten Transport von speziellen Feldbus-I/O-Daten begrenzt.

EtherCAT baut unabhängig von der physischen Netzwerk-Topologie auf einer logischen Ring-Topologie auf. Dies kann dazu führen, dass das gleichzeitige Weiterleiten von Frames in Verzweigungen, insbesondere in Stern-Topologien, verhindert wird. Dies führt zu einer erhöhten Latenz aufgrund von Serialisierung.

PROFINET IRT unterstützt einen Summenframe. Die Verwendung dieser Option ist jedoch auf Zeit-geplantes (englisch: timescheduled) PROFINET IRT in Linien- und Kamm-Topologie beschränkt.

Ausgehend hiervon besteht die Aufgabe der vorliegenden Erfindung darin, ein Verfahren anzugeben, welches eine Datenkommunikation in einem insbesondere industriellen Netzwerk mit vertretbarem Aufwand ermöglicht ohne dabei auf spezielle Anwendungsfälle, bestimmte Topologien und/oder andere Aspekte beschränkt zu sein. Weiterhin ist es Aufgabe der vorliegenden Erfindung, eine Vorrichtung zur Durchführung eines solchen Verfahrens anzugeben.

Diese Aufgabe wird bei einem Verfahren der eingangs genannten Art dadurch gelöst, dass für eine Übertragung von Daten von einem Sender an mehrere Empfänger von dem Sender ein Datenframe gesendet wird, der mehrere, für verschiedene Empfänger bestimmte Unterdatensätze aufweist, und an wenigstens einem Ausgangsport wenigstens eines Knotenpunktes wenigstens ein Unterdatensatz aus dem Datenframe herausgefiltert wird, und/oder dass für eine Übertragung von Daten von mehreren Sendern an einen Empfänger der Empfänger einen Datenframe erhält, der mehrere, von verschiedenen Sendern stammende Unterdatensätze aufweist.

Erfindungsgemäß ist eine Kombination einer Stream-Reservierung, die bevorzugt auf dem "Multiple Listeners per Talker"-Modell und/oder dem in der europäischen Patentanmeldung mit dem Aktenzeichen EP 18154319.0, deren Inhalt hiermit vollumfänglich eingebunden ist, beschriebenen "Multiple Talker per Listener"-Modell für die Echtzeit-Fluss-Reservierung, und einem Summenframe-Prinzip, wie es in ähnlicher Form bei PROFINET IRT zum Einsatz kommt, vorgesehen.

Die von insbesondere genau einem Sender stammenden und für verschiedene Empfänger bestimmten Daten und/oder die von mehreren Sendern stammenden, und für insbesondere genau einen Empfänger bestimmten Daten können in einem Datenframe über einen Stream übertragen werden. Hierzu ist erfindungsgemäß vorgesehen, dass Datenframes übertragen werden, welche Unterdatensätze umfassen, die von verschiedenen Sendern stammen und insbesondere entlang der Netzwerkpfade zusammengefasst werden, bzw. für verschiedene Empfänger bestimmt sind, und an einem oder mehreren Knotenpunkten insbesondere auf verschiedene Ausgangsports aufgeteilt werden.

Bei dem oder den Knotenpunkt(en) handelt es sich bevorzugt um TSN-fähige Kontenpunkte, insbesondere TSN-fähige Switches und/oder Bridges.

Ausgehend von dem Ausdruck "Payload" für die Nutzdaten eines Frames können die Unterdatensätze, welche der Datenframe erfindungsgemäß umfasst, auch als "Paylets" bezeichnet werden.

In besonders bevorzugter Ausgestaltung umfasst jeder Unterdatensatz eine Unterdatensatz-ID und/oder eine Angabe zu der Länge des Unterdatensatzes sowie die zu dem Unterdatensatz gehörigen Nutzdaten. Über die Unterdatensatz-ID wird es möglich, zu identifizieren, von welchem Sender der jeweilige Unterdatensatz stammt bzw. für welchen Empfänger er bestimmt ist. Die Längenangabe dient insbesondere Verwaltungszwecken, um den Anfang eines folgenden Unterdatensatzes in der Payload zu definieren. Bei definierter fester Länge für alle in der Payload enthaltenen Unterdatensätze kann die Längenangabe auch entfallen.

Durch die erfindungsgemäße Einführung von Unterdatensätzen wird es möglich, die Informationen von verschiedenen Quellen bzw. für verschiedene Ziele in einen Frame zu kombinieren, der insbesondere entlang von Netzwerkpfaden in Richtung des einen Empfängers in seiner Größe zunimmt bzw. entlang von Netzwerkpfaden in Richtung der mehreren Empfänger in seiner Größe abnehmen kann. Entsprechend ist insbesondere vorgesehen, dass an zumindest einem Knotenpunkt die Größe eines Datenframes verändert wird, so dass die Größe des Datenframes an einem Eingangsport des Knotenpunktes von der Größe des Datenframes an wenigstens einem Ausgangsport des Knotenpunktes verschieden ist. Dies kann für Datenframes gelten, die von dem einen Sender an die mehreren Empfänger geschickt werden, und/oder für Datenframes, die von den mehreren Sendern an den einen Empfänger geschickt werden.

Durch die erfindungsgemäße Verwendung von Datenframes mit mehreren Unterdatensätzen bzw. Paylets wird die Performance des Netzwerkes durch Reduzierung des Overheads und der Vermeidung von Padding deutlich verbessert. Die Verwendung der Bandbreite und/oder weiterer Ressourcen (insbesondere des Speichers in den Knotenpunkten) wird optimiert. Die Anzahl der Echtzeitflüsse kann reduziert werden. Insbesondere wird die Anzahl von Filtering-Database-Einträgen in den Knotenpunkten reduziert. Die Skalierbarkeit wird deutlich verbessert, da insbesondere mehr Endgeräte etwa Sensoren und/oder Aktoren in einem Netzwerk unterstützt werden können. Ein weiterer erheblicher Vorteil der erfindungsgemäßen Vorgehensweise besteht darin, dass völlige Unabhängigkeit von einer gegebenen Netzwerktopologie besteht. Der Nachteile einer Beschränkung auf eine bestimmte Topologie wird also vollständig vermieden. Es erfolgt eine automatische Kommunikationskonfiguration unter Nutzung eines verbesserten Echtzeit-Fluss-Reservierungsprotokolls. Die Kommunikationsfunktions-Konfiguration wird dadurch erheblich vereinfacht.

Für die Datenübertragung von einem Sender an mehrere Empfänger gilt bevorzugt, dass eine Filterung von wenigstens einem Unterdatensatz aus einem Datenframe an wenigstens einem Knotenpunkt erfolgt, an dem der Datenframe über wenigstens zwei Ausgangsports weitergeleitet wird. So kann der Datenframe mit verschiedenen Unterdatensätzen in Richtung verschiedener Empfänger gesendet werden.

Weiterhin erfolgt die Filterung von Unterdatensätzen an wenigstens einem Knotenpunkt bevorzugt derart, dass wenigstens ein Unterdatensatz, der an einem Ausgangsport eines Knotenpunktes herausgefiltert wird, an wenigstens einem anderen Ausgangsport dieses Knotenpunktes weitergeleitet wird. Auch kann vorgesehen sein, dass von einem ankommenden Datenframe die Unterdatensätze auf zwei oder mehr Ausgangsports verteilt bzw. aufgeteilt werden, insbesondere derart, dass kein Unterdatensatz über zwei Ausgangsports des Knotenpunktes weitergeleitet wird.

Es kann vorgesehen sein, dass bei der Übertragung von Daten von den mehreren Sendern an den einen Empfänger an wenigstens einem Knotenpunkt Datenframes an zwei oder mehr Eingangsports mit verschiedenen Unterdatensätzen ankommen, und die von zwei oder mehr Eingangsports stammenden Unterdatensätze insbesondere zusammengefasst werden ("merging") und ein Datenframe mit den zusammengefassten Unterdatensätze bevorzugt über wenigstens einen, insbesondere genau einen Ausgangsport dieses Knotenpunktes weitergeleitet wird. Von verschiedenen Sendern stammende Unterdatensätze, die sich an einen Empfänger richten, werden gemäß dieser Ausführungsform in wenigstens einem, insbesondere in mehreren zwischen den Empfängern und dem Sender liegenden Knotenpunkten zusammengefasst, was durch einen "Unterdatensatz Merge-Funktion" in den Knotenpunkten realisiert werden kann.

Die Funktionalität für das Filtern (insbesondere für die Datenübertragung von einem Sender an mehrere Empfänger) und/oder das Zusammenfassen, also Mergen (insbesondere für die Datenübertragung von mehreren Sendern an einen Empfänger) von Unterdatensätzen kann beispielsweise in das existierende IEEE802.1 Knotenpunkt- bzw. Bridging-Modell integriert werden, indem ein Funktionsblock für ein Unterdatensatz-Handling auf der Egress-Seite eingerichtet wird. Unter der Egress-Seite ist dabei in an sich bekannter Weise diejenige Seite eines Knotenpunktes zu verstehen, an welcher Daten den Knotenpunkt verlassen.

Eine weitere Ausführungsform des erfindungsgemäßen Verfahrens zeichnet sich dadurch aus, dass Datenframes für die Datenübertragung von dem einen Sender an die mehreren Empfänger einen Header mit einer designierten Adresse umfassen. Alternativ oder zusätzlich können Datenframes für die Datenübertragung von den mehreren Sendern an den einen Empfänger einen Header mit einer designierten Adresse umfassen. Der Header kann auch eine Zieladresse und gegebenenfalls weiteren Angaben aufweisen. Dem Header eines Datenframes folgen in der Regel die Nutzdaten des Pakets der Vermittlerschicht, die auch als "Payload" bezeichnet werden. Insbesondere der Nutzdaten-Bereich der Datenframes ist erfindungsgemäß in Unterdatensätze unterteilt, die von verschiedenen Sendern stammen, bzw. für verschiedene Empfänger bestimmt sind. Der Nutzdatenbereich bzw. die Payload, welche erfindungsgemäß in einen oder mehrere Unterdatensätze ("PAylets") unterteilt ist, kann insbesondere im Bereich von 46 bis 1.500 Byte liegen.

Weiterhin ist bevorzugt vorgesehen, dass die Übertragung von Daten von dem einen Sender an die mehreren Empfänger über Datenframes erfolgt, welche die gleiche designierte Adresse für den Stream und insbesondere die gleiche Priorität und/oder VLAN ID und/oder den gleichen Ethertype in ihren Headern aufweisen. Besonders bevorzugt weisen die Datenframes identische Header auf. Alternativ oder zusätzlich kann in analoger Weise vorgesehen sein, dass die Übertragung von Daten von den mehreren Sendern an den einen Empfänger über Datenframes erfolgt, welche die gleiche designierte Adresse für den Stream und insbesondere die gleiche Priorität und/oder VLAN ID und/oder den gleichen Ethertype in ihren Headern. Besonders bevorzugt weisen sie identische Header auf.

Für die Übertragung von Daten von dem einen Sender an die mehreren Empfänger wird (zyklisch) ein Datenframe abgesendet und insbesondere an wenigstens einem Knotenpunkt über zwei oder mehr Ausgangsports weitergeleitet, so dass hinter dem wenigstens einen Knotenpunkt auf wenigstens zwei Netzwerkpfaden jeweils ein Datenframe übertragen wird. Dann ist bevorzugt der Header der zwei oder mehr Datenframes auf den zwei oder mehr Netzwerkpfaden, die zu verschiedenen Empfängern führen, identisch, zeichnet sich zumindest durch die gleiche designierte Adresse und/oder VLAN Priorität und/oder den gleichen Ethertype aus.

Für die Übertragung von Daten von mehreren Sendern an einen Empfänger wird von jedem der mehreren Sender (zyklisch) ein Datenframe in Richtung des Empfängers geschickt, wobei dann besonders bevorzugt gilt, dass die Header aller von den verschiedenen Sendern abgehenden Datenframes, die über verschiedene Leitungsabschnitte (Links) gehen, die gleiche designierte Adresse und/oder VLAN Priorität und/oder den gleichen Ethertype umfassen, die Header insbesondere identisch sind. Auf mindestens einem Netzwerkpfadabschnitt umfasst der Datenframe weniger als die Summe aller einzelner Frames, da die Paylets aus mehreren Datenframes gemeinsam in einer Payload mindestens eines Datenframes zusammengefasst worden sind.

Am Ende der Datenframes kann in an sich bekannter Weise eine Prüfsumme, etwa eine Frame Check Sequence (FCS) oder eine CRC für einen "Cyclic Redundancy Check" befinden. Weiterhin kann in zu Beginn des Frames, ggf. noch vor einer Ziel- und/oder Quelladresse, eine Präambel vorgesehen sein.

Für den Erhalt einer geschützten Verbindung werden in an sich bekannter Weise vor der eigentlichen Übertragung der Daten Ressourcen in dem oder den Knotenpunkten, die jeweils zwischen den an einem Datenaustausch beteiligten Streamteilnehmern liegen, reserviert, was unter Verwendung eines Reservierungsprotokolls möglich ist. Durch die Verwendung eines Reservierungsprotokolls für den Echtzeit-Fluss wird die komplexe Konfiguration automatisch im Netzwerk durchgeführt, wobei die jeweils vorliegende Topologie genutzt wird. Bei Ressourcen kann es sich beispielsweise um Adresstabelleneinträge, Framebuffer, transmit time slices, Bandbreite, Jitter, und/oder Latenz handeln.

Die Übertragung von Daten von dem einen Sender an die mehreren Empfänger erfolgt bevorzugt über genau einen Stream, und/oder die Übertragung von Daten von den mehreren Sendern an den einen Empfänger erfolgt bevorzugt über genau einen Stream. Ob genau ein Stream für die eine Richtung und/oder genau ein Stream für die andere Richtung vorliegt, kann insbesondere daran ausgemacht werden, dass (für jede Richtung) genau eine Stream-ID vorliegt und mehrere Sender Daten über einen Stream mit der einen ID an einen Empfänger übertragen und/oder mehrere Empfänger Daten über einen Stream mit der einen ID von einem Sender empfangen.

Um die Echtzeitdatenkommunikation von Unterdatensätzen/Paylets in Frames via Stream zu ermöglichen, kommt bevorzugt ein erweitertes Reservierungsprotokoll zum Einsatz, wobei unter einem erweiterten Reservierungsprotokoll insbesondere ein solches zu verstehen ist, dass einem vorbekannten, insbesondere standardisierten Reservierungsprotokoll entspricht, das um eines oder mehrere Datenobjekte bzw. Attribute erweitert ist.

Über eine Erweiterung des Reservierungsmechanismus kann insbesondere eine automatische Konfiguration des erfindungsgemäß vorgesehenen Unterdatensatz- bzw. Paylet-Mechanismus der Datenebene (engl.: data plane) erreicht werden.

Beispiele für bekannte, standardisierte Reservierungsprotokolle, die im Rahmen des erfindungsgemäßen Verfahrens in insbesondere erweiterter Form zum Einsatz kommen können, sind das Stream-Reservation-Protokoll (SRP) oder das Multiple Stream Registration Protokoll (MSRP) und/oder das Ressource Reservation Protokoll (RSVP). SRP stellt dabei die bekannte Änderung bzw. Erweiterung des IEEE802.1Q Standards dar, die separat als IEEE802.1Qat standardisiert wurde.

Eines oder mehrere neue Attribute bzw. Datenobjekte können in vorhandene, standardisierte Fluss-Reservierungsprotokolle eingeführt werden, ohne dass das fundamentale Prinzip der Echtzeit-Flussreservierung geändert werden muss.

Während für den Austausch von Daten von einem Sender an mehrere Empfänger insbesondere das Multiple Stream Registration Protokoll (MSRP) in bevorzugt erweiterter Form herangezogen werden kann, wird für die Datenübertragung von mehreren Empfängern an einen Sender insbesondere auf das "Multiple Talker per Listener"-Modell aus der vorgenannten Anmeldung EP 18154319.0, wiederum in insbesondere erweiterter Form zugegriffen.

Gemäß der Anmeldung mit dem Aktenzeichen EP 18154319.0 wird, um "Multiple Talker per Listener" möglich zu machen, mit dem "Listener Advertise" ein neues Attribut bzw. Datenobjekt eingeführt, das im Rahmen eines insbesondere vorbekannten, standardisierten Reservierungsmodelles Verwendung finden kann. Das Datenobjekt des "Listener Advertise" korrespondiert, wenn man einen Vergleich zu den standardisierten Protokollen ziehen will, zu dem "Talker Advertise" für den vorbekannten Fall eines Datentransfers von einem die Quelle bildenden "Sender/Talker" an einen oder mehrere die Empfängern bildenden "Empfänger/Listener" via Stream.

Der Unterschied zu Multiple Listener per Talker besteht darin, dass nicht von einem Sender ein Advertise herausgegeben wird, sondern von einem Empfänger, welcher Daten über einen Stream erhalten möchte.

Bei der neuartigen Reservierung, die "Multiple Talker per Listener" ermöglicht, erfolgt dabei der Stream-Advertise insbesondere entlang eines Netzwerkbaumes (Trees), dessen Ursprung bzw. Wurzel (Root), der eine Sender/Talker bildet und welcher insbesondere durch die Gesamtheit der Netzwerkpfade definiert ist, über welche Daten an die mehreren Empfänger/Listener gehen.

Für einen Echtzeit-Datentransfer von mehreren Sendern an einen Empfänger kommt im Rahmen der vorliegenden Erfindung bevorzugt die "Multiple Talker per Listener" ermöglichende neue Reservierungsart in Kombination mit der Datenübertragung über Datenframes mit mehreren Unterdatensätzen, die von verschiedenen Sendern/Talkern stammen, zum Einsatz.

Als Beispiel für einen solchen Datentransfer sei die Echtzeitübertragung von den Sensorwerten einer Mehrzahl von Sensoren einer Automatisierungsanlage an die SPS (engl. PLC) dieser genannt.

Für die umgekehrte Richtung, insbesondere die Datenübertragung von auf Basis der Sensorwerte ermittelter Steuerwerte von der SPS an eine Mehrzahl von Aktoren der Automatisierungsanlage, kann dann beispielsweise auf das Multiple Stream Registration Protokoll (MSRP), insbesondere in erweiterter Form, zurückgegriffen werden, diese wiederum in Kombination mit der Datenübertragung über einen einzigen Datenframe mit mehreren Unterdatensätzen, die dann für verschiedene Empfänger bestimmt sind.

Besonders bevorzugt erfolgt sowohl die Datenübertragung von einem Sender an mehrere Empfänger, insbesondere von einer SPS an mehrere Aktoren, als auch die Datenübertragung von mehreren Sendern an einen Empfänger, insbesondere von mehreren Sensoren an eine, bevorzugt die gleiche SPS, unter Durchführung des erfindungsgemäßen Verfahrens.

Eine weitere Ausführungsform des erfindungsgemäßen Verfahrens zeichnet sich dadurch aus, dass für die Datenübertragung von dem einen Sender an die mehreren Empfänger wenigstens eine Talker Unterdatensatz Advertise Nachricht im Netzwerk verbreitet, insbesondere an mehrere, bevorzugt alle Knotenpunkte im Netzwerk übertragen wird.

Die Talker Unterdatensatz Advertise Nachricht stellt besonders bevorzugt ein Attribut bzw. Datenobjekt dar, welches ein für die Reservierung zum Einsatz kommendes Reservierungsprotokoll erweitert. Insbesondere kann das "Multiple Stream Reservation Protokoll" (MSRP) herangezogen werden, welches dann zumindest um das Datenobjekt des "Talker Unterdatensatz Advertise", bevorzugt noch um weitere Datenobjekte, erweitert ist.

Alternativ oder zusätzlich kann vorgesehen sein, dass für die Datenübertragung von den mehreren Sendern an den einen Empfänger eine Listener Unterdatensatz Advertise Nachricht im Netzwerk verbreitet, insbesondere an mehrere, bevorzugt alle Knotenpunkte im Netzwerk übertragen wird.

Die Listener Unterdatensatz Advertise Nachricht stellt besonders bevorzugt ein Attribut bzw. Datenobjekt dar, welches ein für die Reservierung zum Einsatz kommendes Reservierungsprotokoll erweitert. Es kann beispielsweise das "Multiple Talker per Listener" ermöglichende Reservierungsmodell gemäß der Anmeldung des Aktenzeichens EP 18 15 4319 herangezogen werden welches dann zumindest um das Datenobjekt des "Listener Unterdatensatz Advertise" erweitert ist.

Weiterhin kann vorgesehen sein, dass für die Datenübertragung von dem einen Sender an die mehreren Empfänger von einem oder mehreren Empfängern, welche über den Stream wenigstens einen Unterdatensatz von dem einen Sender erhalten wollen, eine Listener Unterdatensatz Join Nachricht gesendet und für diese eine Listener Unterdatensatz Join Reservierung an den Knotenpunkten auf dem Netzwerkpfad zwischen dem Sender und dem jeweiligen Empfänger durchgeführt wird.

Alternativ oder zusätzlich kann vorgesehen sein, dass für die Datenübertragung von den mehreren Sendern an den einen Empfänger von einem oder mehreren Sendern, die jeweils über den Stream wenigstens einen Unterdatensatz an den einen Empfänger übermitteln wollen, jeweils eine Talker Unterdatensatz Join Nachricht gesendet und eine Talker Unterdatensatz Join Reservierung an den Knotenpunkten auf dem Netzwerkpfad zwischen dem jeweiligen Sender und dem Empfänger durchgeführt wird.

Über die Listener Unterdatensatz Join Nachricht kann sich ein Listener anmelden, um einen oder mehrere Unterdatensätze aus einem Datenframe zu erhalten. Über die Talker Unterdatensatz Join Nachricht kann sich ein Talker anmelden, um einen oder mehrere Unterdatensätze an einen Empfänger zu senden.

Eine weitere Ausführungsform zeichnet sich dadurch aus, dass die jeweilige Listener Unterdatensatz Join Nachricht eine Stream-ID und/oder eine Unterdatensatz-ID und/oder einen Reservierungsstatus umfasst. Alternativ oder zusätzlich kann vorgesehen sein, dass die jeweilige Talker Unterdatensatz Join Nachricht eine Stream-ID und/oder eine Unterdatensatz-ID und/oder einen Reservierungsstatus umfasst.

Die Talker Unterdatensatz Join Nachricht und/oder die Listener Unterdatensatz Join Nachricht können - in Analogie zu den korrespondierenden Advertises - Attribute bzw. Datenobjekte darstellen, welche ein zum Einsatz kommendes Reservierungsprotokoll erweitern.

Die Unterdatensatz-Datenobjekte erhalten die für die Identifikation der Unterdatensätze/Paylets in der Payload notwendigen Daten. Diese sind insbesondere die Paylet ID und die Paylet Länge. Da die Paylets Bestandteil der Payload eines Streams darstellen, wird die Stream-ID zur Zuordnung benötigt. Bisher erfolgt bei den bekannten Datenobjekten (Talker Advertise, Listener Join und die in der europäischen Patentanmeldung mit dem Aktenzeichen EP 18154319.0 eingeführten Talker Join und Listener Advertise) die Zuordnung über die Stream ID. Die Datenobjekte können als Ergänzung zu den bekannten Talker und Listener Datenobjekten verwendet werden, oder zusammen mit den in den Datenobjekten vorhandenen allgemeinen Stream Daten als vollständige Alternative verwendet werden.

Eine weitere vorteilhafte Ausführungsform des erfindungsgemäßen Verfahrens zeichnet sich dadurch aus, dass für die Datenübertragung von den mehreren Sendern an den einen Empfänger an wenigstens einem Knotenpunkt, insbesondere an mehreren Knotenpunkten, ein Reservierungsstatus eines ersten Portes in Richtung eines oder mehrerer Sender und ein Reservierungsstatus eines zweiten Portes in Richtung eines oder mehrerer weiterer Sender zusammengefasst werden, und insbesondere der zusammengefasste Reservierungsstatus über einen Port in Richtung des Empfängers weitergeleitet wird. Dies entspricht der Vorgehensweise, die aus der europäischen Patentanmeldung mit dem Aktenzeichen EP 18154319.0 vorbekannt ist.

In völliger Analogie kann vorgesehen sein, dass für die Datenübertragung von einem Sender an mehrere Empfänger an wenigstens einem Knotenpunkt, insbesondere an mehreren Knotenpunkten, ein Reservierungsstatus eines ersten Portes in Richtung eines oder mehrerer Empfänger und ein Reservierungsstatus eines zweiten Portes in Richtung eines oder mehrerer weiterer Empfänger zusammengefasst werden, und insbesondere der zusammengefasste Reservierungsstatus über einen Port in Richtung des Senders weitergeleitet wird. Für die Datenübertragung von einem Sender an mehrere Empfänger werden die Reservierungsstati gemäß dieser Ausführungsform, wie von standardisierten Reservierungsprotokollen vorbekannt, in Richtung des Senders/Talkers weitergeleitet.

In weiterer bevorzugte Ausgestaltung des erfindungsgemäßen Verfahrens ist vorgesehen, dass für die Datenübertragung von dem einen Sender zu mehreren Empfängern, insbesondere unter Verwendung des Rapid Spanning Tree Protocols, der Netzwerkform bestimmt wird, der durch die Netzwerkpfade gebildet wird, über die der eine Sender mit den Empfängern verbunden ist.

Alternativ oder zusätzlich kann vorgesehen sein, dass für die Datenübertragung von den mehreren Sendern an den einen Empfänger, insbesondere unter Verwendung des Rapid Spanning Tree Protocols, der Netzwerkbaum bestimmt wird, der durch Netzwerkpfade gebildet wird, über die die mehreren Sender mit dem einen Empfänger verbunden sind.

Der für die eine und/oder andere Richtung bestimmte Netzwerkbaum stellt dann bevorzugt ein Attribut bzw. Datenobjekt dar, welches ein verwendetes Reservierungsprotokoll, erweitert.

Ein weiterer Gegenstand der vorliegenden Erfindung ist ein Steuerungsverfahren für einen industriellen technischen Prozess oder ein Fahrzeug, bei dem zwischen wenigstens zwei Komponenten eines Steuerungssystems, insbesondere einem oder mehreren Sensoren einer industriellen Automatisierungsanlage oder eines Fahrzeuges als Sender und einem, bevorzugt genau einem Controller, insbesondere einer SPS einer industriellen Automatisierungsanlage oder eines Fahrzeuges als Empfänger, Daten unter Durchführung eines erfindungsgemäßen Verfahrens zur Daten-Kommunikation ausgetauscht werden und auf Basis der ausgetauschten Daten eine Steuerung des industriellen technischen Prozesses oder Fahrzeugs erfolgt.

Gegenstand der Erfindung ist darüber hinaus eine Vorrichtung, umfassend
- wenigstens einen, bevorzugt mehrere Knotenpunkte, insbesondere Bridges und/oder Switche,
   und
- mehrere, jeweils einen Sender bildende Endgeräte, insbesondere Sensoren, und
- ein einen Empfänger bildendes Gerät, insbesondere einen Controller einer industriellen Automatisierungsanlage oder eines Fahrzeuges,
   und/oder
- mehrere, jeweils einen Empfänger bildende Endgeräte, insbesondere Aktoren, und
- ein einen Sender bildendes Gerät, insbesondere einen Controller einer industriellen Automatisierungsanlage oder eines Fahrzeuges,
wobei die Vorrichtung zur Durchführung des erfindungsgemäßen Verfahrens zur Daten-Kommunikation bzw. des erfindungsgemäßen Steuerungsverfahrens ausgebildet und eingerichtet ist.

Die erfindungsgemäße Vorrichtung kann einen Teil eines Steuerungssystems für einen industriellen technischen Prozess darstellen, welches dann einen weiteren Gegenstand der vorliegenden Erfindung bildet.

Weiterhin betrifft die Erfindung ein Computerprogramm, das Programmcodemittel zur Durchführung der Schritte des erfindungsgemäßen Verfahrens zur Daten-Kommunikation bzw. des erfindungsgemäßen Steuerungsverfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Daten-Kommunikation bzw. des erfindungsgemäßen Steuerungsverfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung einer Ausführungsform des Verfahrens der vorliegenden Erfindung unter Bezugnahme auf die beiliegende Zeichnung deutlich. Darin ist
- FIG 1: eine schematische Teildarstellung eines industriellen Netzwerkes zur Veranschaulichung des Falles, dass ein Sender über einen Stream an mehrere Empfänger Daten übermittelt;
- FIG 2: eine rein schematische Darstellung eines Datenframes mit mehreren Unterdatensätzen;
- FIG 3: eine Übersicht mit Datenobjekten der Reservierungsprotokolle;
- FIG 4: eine rein schematische Darstellung einer Bridge, an welcher an welcher Unterdatensätze von einem Eingangsport auf zwei Ausgangsports verteilt werden (Filterung);
- FIG 5: eine rein schematische Darstellung zum vereinfachten IEEE.802.2 Bridge-Modells mit integrierter Unterdatensatz Merging- und Filtering-Funktion;
- FIG 6: eine schematische Teildarstellung eines industriellen Netzwerkes zur Veranschaulichung des Falles, dass ein Empfänger über einen Stream Daten von mehreren Sendern empfängt; und
- FIG 7: eine rein schematische Darstellung einer Bridge, an welcher Unterdatensätze von zwei Eingangsport zusammengefasst werden (Merging).

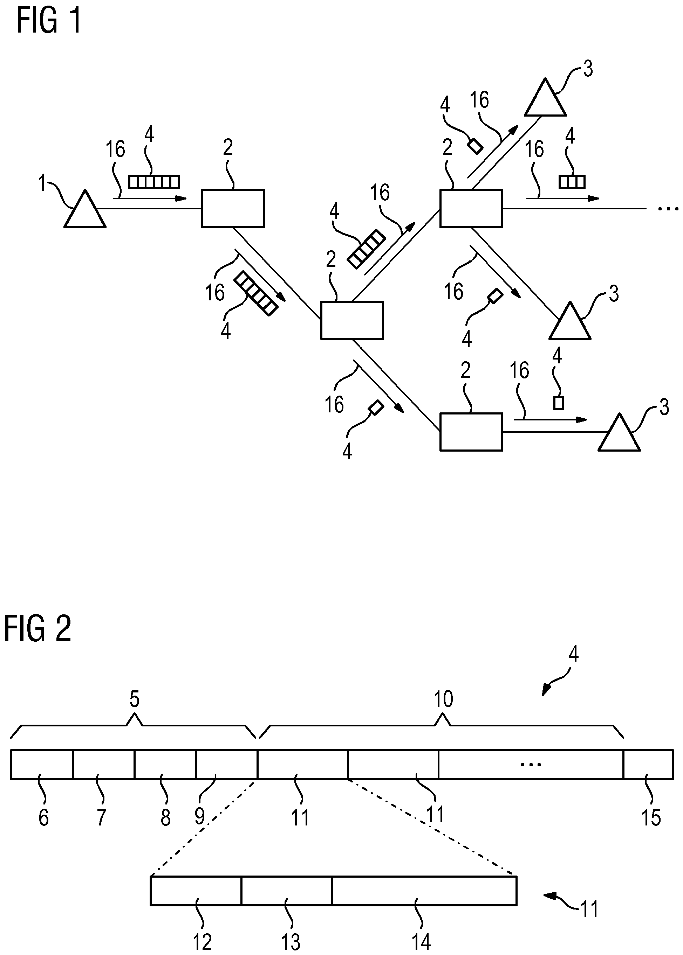

Die FIG 1 zeigt eine rein schematische Teildarstellung eines industriellen Ethernet-basierten Netzwerkes. Konkret ist ein Endgerät zu erkennen, welches einen Sender/Talker 1 darstellt, und das über mehrere Bridges 2, von denen in der FIG 1 nur vier Stück dargestellt sind, mit einer Mehrzahl von weiteren Endgeräten verbunden ist, die jeweils einen Empfänger/Listener 3 darstellen. Von den Empfängern 3 sind in der FIG 1 drei zu erkennen. Die drei Punkte rechts in der FIG 1 sollen verdeutlichen, dass hinter der Bridge 2 oben rechts weitere Bridges 2 und Endgeräte folgen (können).

Wie man der FIG 1 entnehmen kann, zeichnet sich das Ethernet-basierte Netzwerk mit der Vielzahl von Bridges 2 bei dem dargestellten Ausführungsbeispiel durch eine Baumtopologie aus. Selbstverständlich kann auch eine andere aus dem Stand der Technik bekannte Netzwerktopologie, z.B. eine Linie-, Stern- oder Ring-Topologie, vorgesehen sein.

Bei dem den Sender bildenden Endgerät handelt es sich vorliegend um eine SPS 1 einer industriellen Automatisierungsanlage und die die Empfänger bildenden Endgeräte sind Aktoren 3 der Automatisierungsanlage, welche von der der SPS 1 zyklisch Steuersignale benötigen, um auf einen in den Figuren nicht dargestellten industriellen technischen Prozess zyklisch einzuwirken.
Die Steuersignale werden über das Ethernet-basierte Netzwerk von der SPS 1 an die Aktoren 3 übertragen. Die Kommunikation der Steuersignale von der SPS 1 an die Aktoren 3 erfolgt dabei über Datenframes 4, die via Stream im Netzwerk übertragen werden und die mehrere Unterdatensätze 11 für die mehreren Empfänger 3 umfassen.

Die Datenframes 4 sind in der FIG 1 an verschiedenen Positionen im Netzwerk rein schematisch durch mit der Bezugsziffer 4 versehene Blockbildelemente angedeutet. Der FIG 2 kann eine ebenfalls rein schematische, vergrößerte Darstellung eines Datenframes 4 entnommen werden, welche den Aufbau der Datenframes 4 exemplarisch zeigt. Die Frames 4 umfassen konkret einen Header 5 mit einer designierten Stream Adresse 6, einer Zieladresse 7, einem VLAN Tag 8 gemäß IEEE802.1 Q mit einer Priorität und der VLAN ID und einem ET (Ethertype) 9 Ethertype. An den Header 5 schließt sich ein Bereich 10 an, in welchem bei den vorbekannten Datenframes die Nutzdaten ("Payload") enthalten sind, und welcher erfindungsgemäß in mehrere, bei dem hier beschriebenen Ausführungsbeispiel konkret sechs Unterdatensätze 11 unterteilt ist. In der FIG 2 sind von den sechs Unterdatensätzen 11 nur zwei dargestellt und die Weiteren sind durch "...." angedeutet. Es versteht sich, dass eine andere Anzahl von Unterdatensätzen 11 vorgesehen sein kann, was jeweils von der konkreten Anwendung abhängt.

Jeder Unterdatensatz 11 umfasst - wie in FIG 2 beispielhaft für nur einen des Unterdatensätze 11 gezeigt - eine Unterdatensatz ID 12, eine Längenangabe 13, welche die Länge des jeweiligen Unterdatensatzes 11 angibt, und die Nutzdaten 14 des jeweiligen Unterdatensatzes 11. Über die Unterdatensatz-ID wird es möglich, zu identifizieren, für welche(n) Empfänger 3 der jeweilige Unterdatensatz 11 bestimmt ist. Durch die Längenangabe 13 wird es möglich, den Beginn des jeweils nächsten Unterdatensatzes 11 zu bestimmen.

Am Ende des Datenframes 4 befindet sich schließlich - wie bei vorbekannten Datenframes - eine CRC 15 für einen "Cyclic Redundancy Check".

Der Datenframe 4 mit sechs Unterdatensätzen 11 wird zyklisch von dem einen Sender 1 an mehrere, vorliegend konkret sechs Aktoren 3 übermittelt. In der FIG 1 ist die Richtung der Datenübertragung mit Pfeilen 16 angedeutet.

Die Frame-Weiterleitung erfolgt dabei über eine geschützte Verbindung, einen sogenannten Stream. Die Datenkommunikation über einen Stream, die etwa von dem AVB- sowie TSN-Standard (TSN steht für "Time Sensitive Networking") bekannt ist, stellt insbesondere sicher, dass eine vorgegebene Latenzzeit, die von Stream zu Stream variieren kann, und insbesondere von der jeweiligen Anwendung abhängt, eingehalten wird. Somit wird sichergestellt, dass die Steuersignale binnen einer vorbestimmten maximalen Latenzzeit bei den Aktoren 3 eintreffen, also zwischen dem Einspeisen der Daten in das Netzwerk seitens der SPS 1 bis zum Eingang der Daten bei den Aktoren 3 eine maximale Latenzzeit vergeht. So kann etwa eine insbesondere Echtzeit-kritische Kommunikation zwischen der SPS 1 und den Aktoren 3 sichergestellt werden.

Dabei gilt, dass ein Stream, wie er beispielsweise von der Audio/Video-Bridging (AVB) Taskgroup und insbesondere von der TSN-Taskgroup in der internationalen Norm IEE802.1 festgelegt ist, unter Rückgriff auf ein Stream-Reservierungsprotokoll (vorliegend beispielsweise Stream Reservation Protocol - SRP bzw. die Erweiterung MSRP) eingerichtet wird, wodurch ein Stream zwischen einem Sender und einem Empfänger oder auch ein Stream zwischen einem Sender 1 und mehreren Empfängern 3 erhalten werden kann. Letztere Konfiguration entspricht erkennbar derjenigen aus FIG 1, wobei dann insbesondere auf das Multiple Stream Registration Protokoll (MSRP) für die Ressourcen-Reservierung in einer Multiple Listener per Talker Konfiguration zugegriffen werden kann.

Für die Einrichtung eines Streams zwischen der SPS 1 und den Aktoren 3 erfolgt - in völliger Analogie zu der aus dem Stand der Technik vorbekannten Vorgehensweise - eine Reservierung von Ressourcen an jedem Knotenpunkt 2, welcher den Datenframe 4 weiterleitet, wobei für die Reservierung das MSRP in erweiterter Form zum Einsatz kommt, um eine automatische Konfiguration des Datenebenen-Unterdatensatz- bzw. Paylet-Mechanismus zu ermöglichen.

Der Ablauf ist dabei derart, dass in einem ersten Schritt des hier beschriebenen Ausführungsbeispiels von dem Sender, also der SPS 1 eine Talker Unterdatensatz Advertise Nachricht herausgegeben wird. Mit dem Talker Unterdatensatz Advertise kündigt die SPS 1 den Stream, über den der Datenframe 4 mit den mehreren Unterdatensätzen 11 übertragen wird, im Netzwerk an, und es werden die Eigenschaften des Streams beschrieben. Von der SPS 1 werden insbesondere eine Stream-ID, eine Weiterleite-Adresse und eine Bandbreiteninformation für den von ihr abgehenden Datentransfer angegeben. Dabei wird für jeden Stream für jeden Unterdatensatz 11 die jeweilige ID und die Länge bekanntgegeben.

Die Ankündigung des Streams wird an alle Knotenpunkte, vorliegend also Bridges 2 im Netzwerk verteilt, wobei dann jede Bridge 2 die Information des Empfangsports, also des Ports in Richtung des Talkers 1, über den die Ankündigung eingegangen ist, und später auch die Daten eingehen werden, führt. Da die Datenquelle auch als Talker 1 bezeichnet wird, trägt dieser Port auch die Bezeichnung Talker-Port. Die Ports in Richtung des/der Listener werden entsprechend auch als Sende- bzw. Listener-Ports bezeichnet.

An dem von der SPS 1 angebotenen Stream melden sich einer oder mehrere Listener, vorliegend die Aktoren 3 an. Hierfür wird von dem jeweiligen Aktor 3 eine Listener Unterdatensatz Join Nachricht gesendet, welche eine Angabe umfasst, welchen Unterdatensatz oder ggf. welche Unterdatensätze des der jeweilige Aktor 3 empfangen möchte. Dazu ist die Unterdatensatz ID im Listener Unterdatensatz Join Nachricht zusammen mit dem Anmeldestatus enthalten.

An denjenigen Bridges 2, die zwischen der SPS 1 und dem jeweiligen Aktor 3 liegen, wird jeweils eine Reservierung an dem Port in Richtung des Aktors 3, also dem Listener-Port gemäß der von dem den Talker darstellenden SPS 1 angegebenen Streambeschreibung für alle reservierten Unterdatensätze 11 für die am Egress Port befindlichen Aktoren 3 durchgeführt, sofern die verfügbaren Ressourcen an der jeweiligen Bridge 2 ausreichen. Jeder Knotenpunkt 2 prüft, ob seine internen Ressourcen für im Rahmen des einzurichtenden Streams geforderte Performance (insbesondere bezüglich Datenmenge und Datendurchsatz) ausreichen. Ist dies der Fall, reserviert der Knotenpunkt 2 diese Ressourcen für den einzurichtenden Stream für die gewünschten Unterdatensätze 11 und gibt einen positiven Reservierungsstatus an die nachfolgende Bridge 2 weiter, bzw. die letzte Bridge an den Sender 1.

Über die Reservierung kann jeder jeweilige Knotenpunkt 2 sicherstellen, dass er beim anschließenden Datentransfer die erforderliche Performance gewährleistet. Hierin unterscheiden sich Streams von ungeschützten Verbindungen.

Sind keine ausreichenden Ressourcen verfügbar, wird ein negativer Reservierungsstatus weitergegeben.

Die Reservierung startet dabei an der dem jeweiligen Empfänger/Listener, also Aktor 3 nächstliegenden Bridge 2 und "propagiert" entlang des jeweiligen Netzwerkpfades zur Datenquelle/zum Talker, also der SPS 1.

Die Reservierung basiert dabei auf dem auch als Talker-Tree (T_{Tree}) bezeichneten Weiterleite-Baum, der mit dem Rapid Spanning Tree Protocol (RSTP) aufgebaut werden kann.

An denjenigen Bridges 2, welche Abzweigungen bilden, also die Daten über zwei Listener-seitige Ports weiterleiten müssen, findet ein "merge" der ankommenden Listener-Reservierungsstati für jeden Unterdatensatz 11 statt. Dies wird über die "Status merge" Funktion des verwendeten Reservierungsprotokolls realisiert.

Für die Reservierung kommt dabei ein Reservierungsprotokoll zum Einsatz, welches um die neuen Datenobjekte Talker Unterdatensatz Advertise und Listener Unterdatensatz Join erweitert ist.

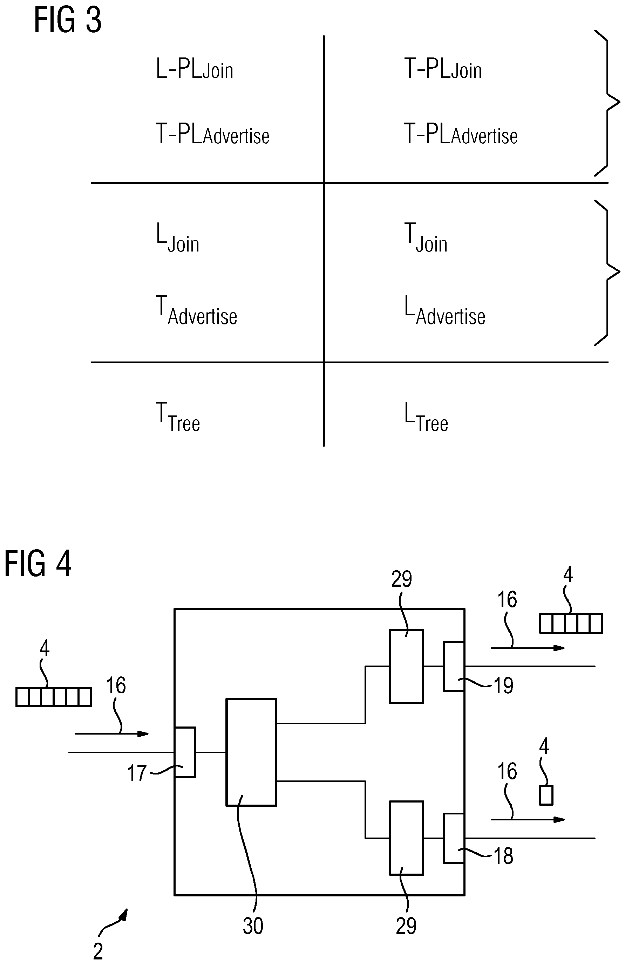

Eine Übersicht u.a. der neuen Datenobjekte Talker Unterdatensatz Advertise T-PL_{Advertise} ("PL" für Paylet, was wie vorstehend angemerkt, synonym zu "Unterdatensatz" verwendet wird) und Listener Unterdatensatz Join L-PL_{Join} kann der FIG 3 entnommen werden, jeweils in Gegenüberstellung mit den korrespondierenden Datenobjekten vom vorbekannten Standard, also dem Talker Advertise T_{Advertise} und Listener Join L_{Join}. Mit der unteren Mengenklammer ist dabei die Echtzeit-Fluss Registrierungs Reservierung (Real-time flow Registration Reservation) und mit den oberen Mengenklammer die Unterdatensatz bzw. Paylet Registrierungs Reservierung je Echtzeitfluss (Paylet Registration Reservation per real-time flow) markiert.

Im Anschluss an eine erfolgreiche Reservierung wird der Datenframe 4 mit der Mehrzahl von Unterdatensätzen 11 von der SPS 1 zyklisch an die Aktoren 3 übertragen.

Dabei gilt, dass an mehreren Knotenpunkten 2 über verschiedene Ausgangsports 18, 19 des jeweiligen Knotenpunktes 2 verschiedene Unterdatensätze 11 weitergeleitet werden, was über eine Unterdatensatz-Filterung an den Ausgangsports erzielt wird. An mehreren Knotenpunkten 2 wird die Größe des Datenframes 4 verändert, so dass die Größe des Datenframes 4 an einem Eingangsport 17 des Knotenpunktes 2 von der Größe des Datenframes 4 an wenigstens einem Ausgangsport 18, 19 des Knotenpunktes 2 verschieden ist.

Konkret wird an dem von der SPS 1 aus gesehen ersten Knotenpunkt 2 der Datenframe 4 noch unverändert über nur einen Ausgangsport der Bridge weitergeleitet. An der nächsten, aus Sicht der SPS 1 zweiten Bridge 2 findet jedoch eine Filterung von Unterdatensätzen 11 statt. Konkret kommt der Datenframe 4 mit allen sechs Unterdatensätzen 11 an dem Sender-seitigen Eingangsport 17 (vgl. FIG 4) an, und wird an dem einen Ausgangs-, also Empfänger-seitigen Port 18 mit anderen Unterdatensätzen 11 weitergeleitet als an dem anderen, zweiten Ausgangsport 19 der Bridge 2. Die ist in der FIG 4 - rein schematisch - für eine Bridge 2 veranschaulicht. Während an dem in FIG 4 unteren Ausgangsport 18 fünf der sechs Unterdatensätze 11 aus dem Datenframe 4 herausgefiltert und der Datenframe 4 somit mit nur einem Unterdatensatz 11 weitergeleitet wird, wird an dem in FIG 4 oberen Ausgangsport 19 nur der eine, an dem unteren Port 18 durchgelassene Unterdatensatz 11 gefiltert und somit werden der bzw. die die Unterdatensätze 11, die an dem Port 19 rausgehen nicht an dem Port 18 weitergeleitet und umgekehrt. Von diesem Knotenpunkt 2 gehen zwei Datenframes 4 aus, die zwar identische Header 5 aufweisen, sich jedoch hinsichtlich ihrer Unterdatensätze 11 unterscheiden.

An der in FIG 1 untersten Bridge 2 wird der ankommende Datenframe 4 mit dem einen Unterdatensatz 11 über nur einen Ausgangsport weitergeleitet und erreicht den dahinterliegenden Empfänger, also Aktor 4.

An der in FIG 1 oben rechts liegenden Bridge 2 hingegen findet, da hinter dieser wiederum mehrere Aktoren 4 liegen, die verschiedene Unterdatensätze 11 des ankommenden Datenframes 4 empfangen wollen, nochmals eine Filterung statt. Konkret werden, wie schematisch über die zugehörigen Blockbildelemente angedeutet, an dem in FIG 1 oberen und an dem in FIG 1 unteren Ausgangsport jeweils vier von den fünf am Eingangsport ankommenden Unterdatensätzen 11 herausgefiltert und über den zwischen dem oberen und dem unteren Ausgangsport liegenden Ausgangsport zwei der fünf Unterdatensätze 11. Entsprechend geht am oberen und unteren Port jeweils ein Datenframe 4 mit einem Unterdatensatz 11 heraus, wobei sich die Unterdatensätze 11 der Frames 4 vom oberen und unteren Port unterscheiden, und am mittleren Port geht ein Frame 4 mit drei - wiederum verschiedenen - Unterdatensätzen 11, die für drei weitere Aktoren 3, die in der FIG 1 nicht dargestellt, sondern über "...." nur angedeutet sind, bestimmt sind, raus. Die Frames 4 hinter allen drei Ausgangsport des Knotenpunktes 2 weisen den gleichen Header 5 auf.

Im Ergebnis erreicht bei dem beschriebenen Ausführungsbeispiel jeden Aktor 3 nur genau ein Unterdatensatz 11. Unterschiedliche Daten werden von einem Sender 1 an eine Mehrzahl von Empfängern 3 über genau einen Stream und Datenframes 4 mit mehreren Unterdatensätzen 11, deren Größe in Richtung des jeweiligen Empfängers abnimmt, übertragen.

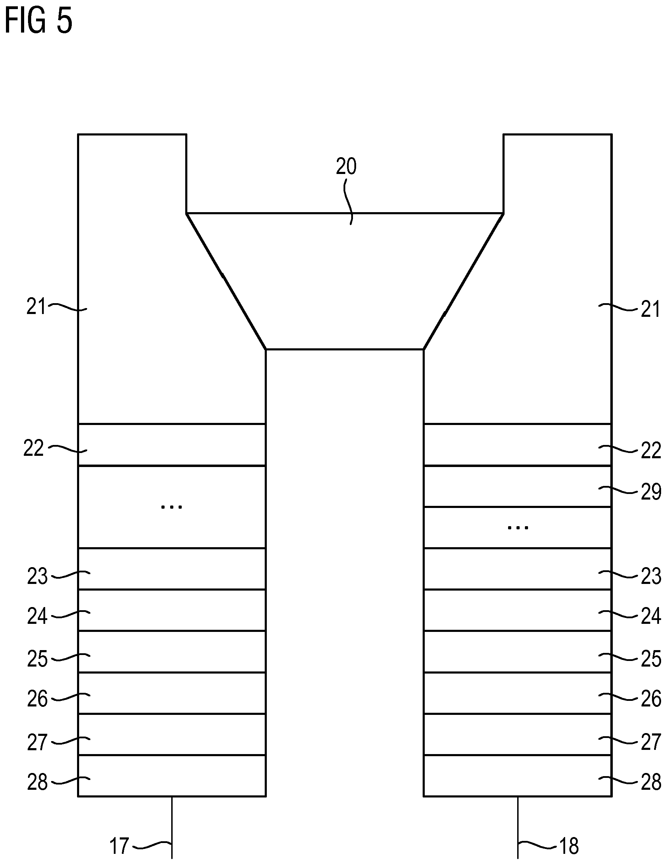

Die Funktionalität für das Filtern von Unterdatensätzen 11 an den Knotenpunkten 2 ist bei dem dargestellten Ausführungsbeispiel in das existierende IEEE802.1 Knotenpunkt- bzw. Bridging-Modell integriert worden, indem ein Funktionsblock für ein Unterdatensatz-Handling auf der Egress-Seite eingerichtet wurde. Die ist in der FIG 5 - erneut rein schematisch - veranschaulicht. Darin ist neben einem Eingangs- 17 und einem Ausgangsport 18 folgendes gezeigt: MAC Relay Entity 20 und sowohl für Ingress- als auch die Egress-Seite, MAC entities 21, Stream-Klassifikation/Identifikation 22, SyncRecognition 23, MACsec 24, 802.3ah OAM 25, 802.3X Pause 26, 802.3bf Time stamping 27, PHY 28. Die Funktion Stream Paylet Filtering/Merging 29 ist erkennbar auf der Egress-Seite vorgesehen. Auf die Merging-Funktion wird im Folgenden noch näher eingegangen. Die Stream Paylet Filtering/Merging Funktion 29 ist auch in der FIG 4 schematisch durch ein Blockbildelement dargestellt. In gleicher Weise schematisch angedeutet ist das MAC Relay 30.

Neben der in FIG 1 gezeigten Situation, gemäß der Daten, vorliegend Steuersignale von einem Endgerät an mehrere weitere Netzwerkteilnehmer zu verteilen sind, findet sich - insbesondere in industriellen Anwendungen - jedoch auch der umgekehrte Fall, nämlich dass von zwei oder mehr Quellen Daten an ein (gemeinsames) Ziel zu übermitteln sind. Dies ist beispielsweise der Fall, wenn in einer Automatisierungsanlage von einer Mehrzahl von Sensoren 31 erfasste Istwerte an eine zentrale Steuerung, die wiederum durch eine SPS 1 gegeben sein kann, echtzeit-kritisch zu übermitteln sind.

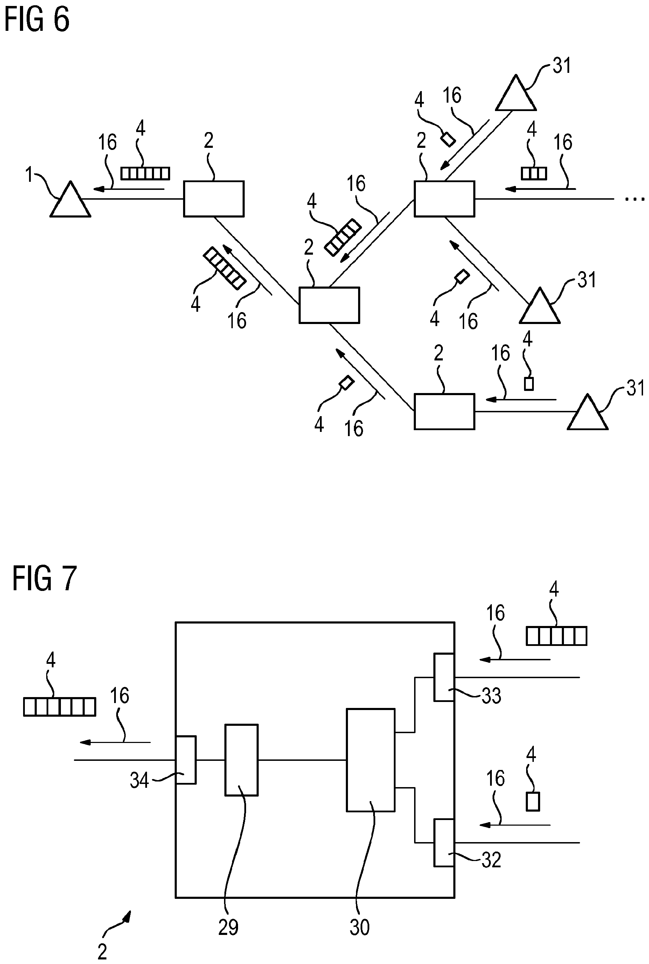

Diese Situation ist in FIG 6 dargestellt, die erneut eine rein schematische Teildarstellung eines industriellen Ethernet-basierten Netzwerkes zeigt, wobei wiederum ein Endgerät durch die SPS 1 gegeben ist, die nunmehr jedoch den Empfänger/Listener darstellt, und eine Mehrzahl von Sendern/Talkern vorhanden sind, konkret mehrere Sensoren 31, von denen in FIG 6 insgesamt drei zu erkennen sind. Es sei angemerkt, dass die Netzwerktopologie in den Figuren 1 und 6 übereinstimmend dargestellt ist, da vorliegend die in FIG 1 erkennbaren Aktoren 3 und die in die FIG 6 erkennbaren Sensoren 31 jeweils in einem Endgerät enthalten sind, dies aber natürlich keineswegs der Fall sein muss. Die SPS 1 und die Sensoren 31 sind entsprechend ebenfalls über eine Mehrzahl von Bridges 2 in - der rein optionalen - Baumtopologie miteinander verbunden.

Nach dem Stand der Technik müsste für die Übertragung von mit den Sensoren 31 erfassten Istwerten an die SPS 1 für jeden Sensor 31 ein eigener Stream eingerichtet werden und damit wäre ein gegenüber der Situation gemäß FIG 1 deutlich erhöhter Netzwerk-Verwaltungs- und- Verarbeitungsaufwand verbunden.

Zur Reduzierung der Anzahl von Streams in demjenigen Falle, dass Daten von mehreren Quellen/Sendern 31 an genau ein Ziel/Empfänger 1 gesendet werden sollen, ist in der europäischen Patentanmeldung mit dem Aktenzeichen EP 18 15 4319 eine neue Art der Reservierung beschrieben, die eine "Multiple Talker per Listener" Konfiguration ermöglicht, so dass die mehreren Sensoren 31 über nur einen Stream mit einer Stream-ID Daten an die SPS 1 übermitteln können.

Dieser Reservierungsmechanismus kommt vorliegend in Kombination mit einer Datenübertragung in Datenframes 4 mit mehreren Unterdatensätzen 11 zum Einsatz, der vorstehend bereits für die andere Richtung beschrieben wurde.

Für die Reservierung wird dabei von dem Empfänger, also der SPS 1, eine Listener Unterdatensatz Advertise Nachricht für den Stream herausgegeben, die eine Streambeschreibung und die darin gewünschten Unterdatensätze 11 mit der jeweiligen Länge und ID umfasst, und die Listener Unterdatensatz Advertise Nachricht wird über die Bridges 2 im Netzwerk verteilt und an die Sensoren 31 übertragen. Mit der Listener Unterdatensatz Advertise Nachricht kündigt die SPS 1 im Netzwerk an, dass sie über einen Stream Daten empfangen möchte. Es sei angemerkt, dass die Information darüber, dass die Sensoren 31 Istwerte für die SPS 1 bereitstellen können, auf anderem Wege bereitgestellt wurde. Dies ist in FIG 1 nach dem Stand der Technik ebenfalls notwendig und kann z.B. im industriellen Umfeld während der Programmierung der SPS 1 und der IO Module erfolgen.

Nachdem die SPS 1 den Listener Unterdatensatz Advertise herausgegeben hat und dieser verteilt wurde, wird von jedem Sensor 31, von dem erfasste Istwerte an die SPS 1 übertragen werden sollen, eine Talker Unterdatensatz Join Nachricht herausgegeben. Bei dem dargestellten Ausführungsbeispiel senden alle Sensoren 31 eine Talker Unterdatensatz Join Nachricht. Für jeden Sensor 31 wird dann eine Talker Unterdatensatz Join Reservierung an den Bridges 2 auf dem Netzwerkpfad zwischen dem jeweiligen Sensor 31 und der SPS 1 durchgeführt. Die Talker Unterdatensatz Join Nachricht umfasst u.a. eine Stream ID, eine Unterdatensatz ID und einen Reservierungsstatus.

Die Reservierung von Ressourcen in den Bridges 2 erfolgt dabei in Abweichung von dem Szenario gemäß FIG 1 ausgehend von dem jeweiligen Talker, also jeweiligen Sensor 31, in Richtung des einen Listeners 1, also der SPS 1, und somit in der gleichen Richtung wie die Weiterleitung der Istwerte von den Sensoren 31 an die SPS 1, die über den Stream als Datenframe 4 erfolgen wird, wenn die Reservierung an den Bridges 2 erfolgreich war. Die Richtung der späteren Datenübertragung ist in der FIG 5 - in Analogie zu FIG 1 - mit Pfeilen 16 angedeutet.

An denjenigen Bridges 2, welche Abzweigungen bilden, also an denen Daten über zwei Talker-seitige Ports ankommen werden, findet ein "merge" der ankommenden Talker-Unterdatensatz-Reservierungs-Stati statt. Dies wird - in Analogie zu der im Zusammenhang mit FIG 1 beschriebenen Vorgehensweise - über die "Status merge" Funktion des verwendeten Reservierungsprotokolls realisiert. Dabei kommt ein Reservierungsprotokoll zum Einsatz, welches um die neuen Datenobjekte Listener Unterdatensatz Advertise und Talker Unterdatensatz Join erweitert ist, und welches auf die für die Empfänger/Listener vorbekannte Listener-Status-Merge-Funktion bekannter Protokolle zurückgreift, da die eigentliche Reservierung von Ressourcen an dem bzw. den Knotenpunkten prinzipiell gleich bzw. analog zu der vorbekannten Vorgehensweise mit einem Sender/Talker und mehreren Empfängern/Listenern ablaufen kann.

Abweichend vom Stand der Technik werden die Talker-Stati dabei in Richtung, des Listener-Trees zu dem genau einen Empfänger, also der SPS 1, zusammengeführt (merged).

Auch der Listener-Tree, der sich aus dem weiteren neuen Listener Advertise Datenobjekt des verwendeten, erweiterten Reservierungsprotokolls bildet, wird vorliegend mit dem Rapid Spanning Tree Protocol bestimmt. Der Tree entsteht dabei aus dem gespeicherten Port des Listener Advertise.

Eine Übersicht der neuen Datenobjekte Listener Unterdatensatz Advertise L-PL_{Advertise}, Talker Unterdatensatz Join T-PL_{Join} und dem aus dem Advertise resultierenden Listener Tree L_{Tree} kann der rechten Seite der FIG 3 entnommen werden, jeweils in Gegenüberstellung mit den korrespondierenden Datenobjekten für die andere Richtung gemäß FIG 1.

Im Anschluss an eine erfolgreiche Reservierung wird der Datenframe 4 von den Sensoren 31 zyklisch an die SPS 1 übertragen.

Die Datenübertragung von mehreren Sendern 31 an einen Empfänger 1 erfolgt dabei über Datenframes 4, die an wenigstens einem Knotenpunkt 2, vorliegend an mehreren Knotenpunkten 2 mehrere, von verschiedenen Sendern 31 stammende Unterdatensätze 11 aufweisen.

Es gilt dabei wiederum, dass an mehreren Knotenpunkten 2 die Größe der Datenframes 4 verändert wird, und die Größe eines Datenframes 4 an einem Eingangsport 32, 33 des Knotenpunktes 2 von der Größe des Datenframes 4 an wenigstens einem Ausgangsport 34 des Knotenpunktes 2 verschieden ist.

Konkret kommen an mehreren Knotenpunkten 2 Datenframes 4 an zwei oder mehr Eingangsports 32, 33 mit verschiedenen Unterdatensätzen 11 an, und die von zwei oder mehr Eingangsports 32, 33 stammenden Unterdatensätze 11 werden zusammengefasst und einDatenframe 4 mit den zusammengefassten Unterdatensätze 11 wird an genau einem Ausgangsport 34 dieses Knotenpunktes 2 weitergeleitet (vgl. FIG 6).

Gemäß FIG 6 umfasst der jeweiligen Datenframe 4, wenn er von dem jeweiligen Sensor 31 weggeschickt wird, jeweils einen Unterdatensatz 11, was in der FIG 6 schematisch durch die den Frame 4 repräsentierenden Blockbildelemente angedeutet ist, welche die kleinste Größe unmittelbar hinter dem jeweiligen Sensor 31 haben. An dem oberen rechten Knotenpunkt 2 in FIG 6 kommen die Datenframes 4 von verschiedenen Sendern 31 über drei Eingangsports, jeweils mit verschiedenen Unterdatensätzen 11 an und diese werden zusammengefasst, was über die Stream paylet merging Funktion 29 erreicht wird, die bei dem dargestellten Ausführungsbeispiel - genau wie die Stream paylet Filtering Funktion - in das existierende IEEE802.1 Knotenpunkt- bzw. Bridging-Modell integriert worden ist, indem ein Funktionsblock 29 für ein Unterdatensatz-Handling auf der Egress-Seite eingerichtet wurde (vgl. FIG 5 und die vorstehende Beschreibung zu dieser).

An dem in FIG 6 unten rechts befindlichen Knotenpunkt 2 wird der ankommende Datenframe 4 unverändert weitergeleitet, konkret mit dem einen Unterdatensatz 11, welcher an dem Eingangsport ankommt. An dem in Richtung der SPS 1 folgenden Knotenpunkt 2 werden dann wieder Unterdatensätze 11 zusammengefasst, konkret die fünf Unterdatensätze 11, die von den oberen Sensoren 31 kommen mit dem einen Unterdatensatz 11 von dem unteren Sensor 31. Der von dem Knotenpunkt 2 ausgehende Datenframe 4 umfasst dann entsprechend sechs Unterdatensätze 11, und wird an dem nächsten, der SPS 1 am nächsten liegenden Knotenpunkt 2 unverändert weitergeleitet und erreicht die SPS 1.
In FIG 7 ist dies - in Analogie zu FIG 4 - beispielhaft für diesen Knotenpunkt 2 dargestellt, wobei an dem in der FIG oberen Eingangsport 33 der Datenframe 4 mit fünf Unterdatensätzen 11 und an dem unteren der Datenframe 4 mit einem Unterdatensatz 11 ankommt und über die Stream Paylet Filtering/Merging Fubktion 29 die Unterdatensätze 11 zusammengefasst werden und am Ausgangsport 34 ein Datenframe 4 mit allen sechs Unterdatensätzen 11 in Richtung der SPS 1 herausgeht.

Im Ergebnis werden die von sämtlichen Sensoren 31 stammenden Daten über genau einen Stream und Datenframes, deren Größe in Richtung des einen Empfängers, also der SPS 1 anwächst, die Daten übertragen. Der Empfänger, also die SPS 1 empfängt einen Datenframe 4, der mehrere, von verschiedenen Sendern, vorliegend Sensoren 31 stammende Unterdatensätze 11 umfasst.

Durch die Einführung und Nutzung von Unterdatensätzen 11 wird es möglich, die Informationen von verschiedenen Quellen bzw. für verschiedene Ziele in einem Frame 4 zu kombinieren. Die Performance eines Netzwerkes kann durch Reduzierung des Overheads und der Vermeidung von Padding deutlich verbessert werden. Die Verwendung der Bandbreite und der Ressourcen (insbesondere des Speichers in den Knotenpunkten 2) wird optimiert. Die Anzahl der Echtzeitflüsse kann reduziert werden. Insbesondere wird die Anzahl von Filtering-Database-Einträgen in den Knotenpunkten 2 reduziert. Die Skalierbarkeit wird deutlich verbessert, da insbesondere mehr Endgeräte etwa Sensoren 31 und/oder Aktoren 3 in einem Netzwerk unterstützt werden können. Ein weiterer erheblicher Vorteil der erfindungsgemäßen Vorgehensweise besteht darin, dass völlige Unabhängigkeit von einer gegebenen Netzwerktopologie besteht. Der Nachteile einer Beschränkung auf eine bestimmte Topologie wird also vollständig vermieden. Es erfolgt eine automatische Kommunikationskonfiguration unter Nutzung eines verbesserten Echtzeit-Fluss-Reservierungsprotokolls. Die Kommunikationsfunktions-Konfiguration wird dadurch erheblich vereinfacht.

Dass durch die erfindungsgemäße Vorgehensweise die zu transportierende Datenmenge deutlich reduziert werden kann, sei auch durch folgende rein beispielhafte Rechnung verdeutlicht. Nimmt man an, dass eine Übermittlung von Daten von 1000 Sensoren 31 mit 4 Byte Daten zu einer SPS 1 erforderlich ist, und ein 1GBit/s Ethernet-Netzwerk vorliegt (mit einer minimalen Framegröße von 64 Bit und 12 Bit Inter-Frame-Gap), ergibt sich für den vorbekannten Fall von einem Frame pro Datensatz eine Makespan von 1000*(64+12)*8*1ns = 608µs. Werden hingegen die Datensätze in einem Frame 4 zusammengefasst, wie es die Erfindung vorsieht, erhält man eine Makespan von nur 4024*8*1ns = 32,2 µs.

Das industrielle Netzwerk mit den Bridges 2 und Endgeräten 1, 3, 31 aus den Figuren 1 und 6 ist Bestandteil eines Ausführungsbeispiels einer erfindungsgemäßen Vorrichtung zur Durchführung des erfindungsgemäßen Verfahrens.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Daten-Kommunikation in einem insbesondere industriellen Netzwerk mit einem oder mehreren Knotenpunkten (2), insbesondere Switches und/oder Bridges, via Stream,
bei dem für die Datenübertragung zwischen Streamteilnehmern (1, 3, 31) über einen oder mehrere Knotenpunkte (2) des Netzwerks unter Nutzung eines Reservierungsprotokolls Ressourcen an dem oder den Knotenpunkten (2) reserviert und anschließend Daten via Stream übertragen werden,
**dadurch gekennzeichnet, dass**
für eine Übertragung von Daten von einem Sender (1) an mehrere Empfänger (3) von dem Sender (1) ein Datenframe (4) gesendet wird, der mehrere, für verschiedene Empfänger (3) bestimmte Unterdatensätze (11) aufweist, und an wenigstens einem Ausgangsport (18, 19) wenigstens eines Knotenpunktes (2) wenigstens ein Unterdatensatz (11)aus dem Datenframe (4) herausgefiltert wird, und/oder dass für eine Übertragung von Daten von mehreren Sendern (31) an einen Empfänger (1) der Empfänger (1)einen Datenframe (4) erhält, der mehrere, von verschiedenen Sendern stammende Unterdatensätze (11) aufweist.

2. Verfahren nach Anspruch 1,
**dadurch gekennzeichnet, dass**
an zumindest einem Knotenpunkt (2) die Größe eines Datenframes (4) verändert wird, so dass die Größe des Datenframes (4) an einem Eingangsport (17, 32, 33) des Knotenpunktes (2) von der Größe des Datenframes (4) an wenigstens einem Ausgangsport (18, 19, 34) des Knotenpunktes (2) verschieden ist.

3. Verfahren nach Anspruch 1 oder 2,
**dadurch gekennzeichnet, dass**
bei der Übertragung von Daten von den mehreren Sendern (31) an den einen Empfänger (1) an wenigstens einem Knotenpunkt (2) Datenframes (4) an zwei oder mehr Eingangsports (32, 33) mit verschiedenen Unterdatensätzen (11) ankommen, und die von zwei oder mehr Eingangsports (32, 33) stammenden Unterdatensätze (11) insbesondere zusammengefasst werden und ein Datenframe (4) mit den zusammengefassten Unterdatensätzen (11) bevorzugt über wenigstens einen, insbesondere genau einen Ausgangsport (34) des Knotenpunktes (2) weitergeleitet wird.

4. Verfahren nach einem der vorhergehenden Ansprüche,
**dadurch gekennzeichnet, dass**
die Übertragung von Daten von dem einen Sender (1) an die mehreren Empfänger (3) über genau einen Stream erfolgt, und/oder dass die Übertragung von Daten von den mehreren Sendern (31) an den einen Empfänger (1) über genau einen Stream erfolgt.

5. Verfahren nach einem der vorhergehenden Ansprüche,
**dadurch gekennzeichnet, dass**
jeder Unterdatensatz (11) Nutzdaten (14) und eine Unterdatensatz-ID (12) und/oder eine Angabe (13) zu der Länge des Unterdatensatzes (11) umfasst.

6. Verfahren nach einem der vorhergehenden Ansprüche,
**dadurch gekennzeichnet, dass**
Datenframes (4) für die Datenübertragung von dem einen Sender (1) an die mehreren Empfänger (3) einen Header (5) mit einer designierten Adresse (6) umfassen, und/oder dass Datenframes (4) für die Datenübertragung von den mehreren Sendern (31) an den einen Empfänger (1) einen Header (5) mit einer designierten Adresse (6) umfassen.

7. Verfahren nach Anspruch 6,
**dadurch gekennzeichnet, dass**
die Übertragung von Daten von dem einen Sender (1) an die mehreren Empfänger (3) über Datenframes (4) erfolgt, welche die gleiche designierte Adresse (6) und insbesondere die gleiche Priorität und/oder VLAN ID und/oder den gleichen Ethertype in ihren Headern (5), bevorzugt identische Header (5) aufweisen, und/oder dass die Übertragung von Daten von den mehreren Sendern (31) an den einen Empfänger (1) über Datenframes (4) erfolgt, welche die gleiche designierte Adresse (6) und insbesondere die gleiche Priorität und/oder VLAN ID und/oder den gleichen Ethertype in ihren Headern (5), bevorzugt identische Header (5) aufweisen.

8. Verfahren nach einem der vorhergehenden Ansprüche,
**dadurch gekennzeichnet, dass**
für die Reservierung von Ressourcen an einem oder mehreren Knotenpunkten (2) wenigstens ein Reservierungsprotokoll verwendet wird, insbesondere ein standardisiertes Reservierungsprotokoll, welches bevorzugt um wenigstens ein Datenobjekt erweitert ist.

9. Verfahren nach einem der vorhergehenden Ansprüche,
**dadurch gekennzeichnet, dass**
für die Datenübertragung von dem einen Sender (1) an die mehreren Empfänger (3) wenigstens eine Talker Unterdatensatz Advertise Nachricht im Netzwerk verbreitet, insbesondere an mehrere, bevorzugt alle Knotenpunkte (2) im Netzwerk übertragen wird, und/oder für die Datenübertragung von den mehreren Sendern (31) an den einen Empfänger (1) eine Listener Unterdatensatz Advertise Nachricht im Netzwerk verbreitet, insbesondere an mehrere, bevorzugt alle Knotenpunkte (2) im Netzwerk übertragen wird.

10. Verfahren nach einem der vorhergehenden Ansprüche,
**dadurch gekennzeichnet, dass**
für die Datenübertragung von dem einen Sender (1) an die mehreren Empfänger (3) von einem oder mehreren Empfängern (3), welche über den Stream wenigstens einen Unterdatensatz (11) von dem einen Sender (1) erhalten wollen, eine Listener Unterdatensatz Join Nachricht gesendet und für diese eine Listener Unterdatensatz Join Reservierung an dem oder den Knotenpunkten (2) auf dem Netzwerkpfad zwischen dem Sender (1) und dem jeweiligen Empfänger (3) durchgeführt wird, und/oder für die Datenübertragung von den mehreren Sendern (31) an den einen Empfänger (1) von einem oder mehreren Sendern (31), die jeweils über den Stream wenigstens einen Unterdatensatz (11) an den einen Empfänger (1) übermitteln wollen, jeweils eine Talker Unterdatensatz Join Nachricht gesendet und eine Talker Unterdatensatz Join Reservierung an dem oder den Knotenpunkten (2) auf dem Netzwerkpfad zwischen dem jeweiligen Sender (31) und dem Empfänger (1) durchgeführt wird.

11. Verfahren nach Anspruch 10,
**dadurch gekennzeichnet, dass**
die jeweilige Listener Unterdatensatz Join Nachricht, eine Stream-ID und/oder eine Unterdatensatz-ID und/oder einen Reservierungsstatus umfasst, und/oder dass die jeweilige Talker Unterdatensatz Join Nachricht eine Stream-ID und/oder eine Unterdatensatz-ID und/oder einen Reservierungsstatus umfasst.

12. Verfahren nach Anspruch 8 und einem der Ansprüche 9 bis 11,
**dadurch gekennzeichnet, dass**
die Listener Unterdatensatz Advertise Nachricht und/oder die Talker Unterdatensatz Join Nachricht und/oder die Talker Unterdatensatz Join Reservierung das Reservierungsprotokoll erweiternde Datenobjekte darstellen.

13. Verfahren nach einem der vorhergehenden Ansprüche,
**dadurch gekennzeichnet, dass**
für die Datenübertragung von den mehreren Sendern (31) an den einen Empfänger (1) an wenigstens einem Knotenpunkt (2), insbesondere an mehreren Knotenpunkten (2), ein Reservierungsstatus eines ersten Portes (32) in Richtung eines oder mehrerer Sender (31) und ein Reservierungsstatus eines zweiten Portes (33) in Richtung eines oder mehrerer weiterer Sender (31) zusammengefasst werden, und insbesondere der zusammengefasste Reservierungsstatus über einen Port (34) in Richtung des Empfängers (1) weitergeleitet wird.

14. Verfahren nach einem der vorhergehenden Ansprüche,
**dadurch gekennzeichnet, dass**
für die Datenübertragung von dem einen Sender (1) an die mehreren Empfänger (31) insbesondere unter Verwendung des Rapid Spanning Tree Protocols der Netzwerkbaum bestimmt wird, der durch Netzwerkpfade gebildet wird, über die der eine Sender (1) mit den Empfängern (3) verbunden ist, und/oder für die Datenübertragung von den mehreren Sendern (31) an den einen Empfänger (1) insbesondere unter Verwendung des Rapid Spanning Tree Protocols der Netzwerkbaum bestimmt wird, der durch Netzwerkpfade gebildet wird, über die die mehreren Sender (31) mit dem einen Empfänger (1) verbunden sind.

15. Verfahren nach Anspruch 8 und 14,
**dadurch gekennzeichnet, dass**
der wenigstens eine bestimmte Netzwerkbaum ein das wenigstens eine Reservierungsprotokoll erweiterndes Datenobjekt darstellt.

16. Steuerungsverfahren für einen industriellen technischen Prozess oder ein Fahrzeug, bei dem zwischen wenigstens zwei Komponenten eines Steuerungssystems, insbesondere einem oder mehreren Sensoren (31) einer industriellen Automatisierungsanlage oder eines Fahrzeuges als Sender und einem, bevorzugt genau einem Controller, insbesondere einer SPS (1) einer industriellen Automatisierungsanlage oder eines Fahrzeuges als Empfänger, Daten unter Durchführung des Verfahrens nach einem der vorhergehenden Ansprüche ausgetauscht werden und auf Basis der ausgetauschten Daten eine Steuerung des industriellen technischen Prozesses oder Fahrzeugs erfolgt.

17. Vorrichtung umfassend
- wenigstens einen, bevorzugt mehrere Knotenpunkte(2), insbesondere Bridges und/oder Switche,
und
- mehrere, jeweils einen Sender bildende Endgeräte, insbesondere Sensoren(31), und
- ein einen Empfänger bildendes Gerät, insbesondere einen Controller (1) einer industriellen Automatisierungsanlage oder eines Fahrzeuges,
und/oder
- mehrere, jeweils einen Empfänger bildende Endgeräte, insbesondere Aktoren (3), und
- ein einen Sender bildendes Gerät, insbesondere einen Controller (1) einer industriellen Automatisierungsanlage oder eines Fahrzeuges,
wobei die Vorrichtung zur Durchführung des erfindungsgemäßen Verfahrens zur Daten-Kommunikation bzw. des erfindungsgemäßen Steuerungsverfahrens ausgebildet und eingerichtet ist.

18. Steuerungssystem für einen industriellen technischen Prozess umfassend eine Vorrichtung nach Anspruch 17.

19. Computerprogramm umfassend Programmcode-Mittel zur Durchführung des Verfahrens nach einem der Ansprüche 1 bis 16.

20. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 16 durchzuführen.
